(19) Europäisches Patentamt
European Patent Office
Office européen des brevets

(11) **EP 4 462 784 A1**

(12) **EUROPEAN PATENT APPLICATION**

(43) Date of publication:
**13.11.2024 Bulletin 2024/46**

(21) Application number: **24173009.2**

(22) Date of filing: **29.04.2024**

(51) International Patent Classification (IPC):
**H04N 19/463** *(2014.01)* **H04N 19/50** *(2014.01)*
**H04N 19/597** *(2014.01)*

(52) Cooperative Patent Classification (CPC):
**H04N 19/597; H04N 19/463; H04N 19/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.05.2023 JP 2023077766**

(71) Applicant: **CANON KABUSHIKI KAISHA**
**Tokyo 146-8501 (JP)**

(72) Inventor: **YAMAMOTO, Tetsuya**
**Tokyo, 146-8501 (JP)**

(74) Representative: **TBK**
**Bavariaring 4-6**
**80336 München (DE)**

(54) **ENCODING APPARATUS, DECODING APPARATUS, AND STORAGE MEDIUM**

(57) In order to improve encoding efficiency in cases in which a scan is performed by irradiating a laser, or the like, an encoding apparatus includes an acquisition unit configured to acquire point cloud data consisting of a plurality of measured points from a measurement unit; a calculating unit configured to calculate predicted points corresponding to the plurality of measured points based on measurement model information relating to a measurement pattern of the measurement unit; a difference calculating unit configured to calculate a difference between the measured points and the predicted points corresponding to the measured points; and an encoding unit configured to encode the difference.

FIG. 7

**Description**

BACKGROUND OF THE INVENTION

Field of the Invention

The present invention relates to an encoding apparatus, a decoding apparatus, a storage medium, and the like.

Description of the Related Art

In recent years, the development of LiDAR (Light Detection And Ranging) technology that is able to measure 3-dimensional position information has progressed along with the development of autonomous driving technology and the spread of VR (virtual reality) technology.

LiDAR refers to a device that discretely radiates a laser and calculates the time until the light that has been reflected from the laser returns for each irradiation angle while rapidly changing the irradiation angle of the laser, and thereby measures 3-dimensioanl position information for surrounding objects. LiDAR outputs a set of points that indicates 3-dimensional position information for a surrounding object to serve as point cloud data from distance information to an object in each irradiation angle of the laser.

Generally, point cloud data includes a large amount of points, and in addition to positional information, each point also has a plurality of attribute information such as, for example, time stamp information, intensity information, RGB information, or the like. Point cloud data is large quantity data, and therefore, it is possible that its storage and communications will incur a high cost, and it is also possible that the processing of these will a take a long time.

In relation to these problems, there is a need to reduce the data volume for point clouds, and for example, in MPEG (moving picture experts group), the use of G-PCC (geometry based point cloud compression), which is the method for encoding point clouds that is disclosed in the above publication 1 (G-PCC codec description v2, ISO/IEC MPEG (JTC 1/SC 29/WG11), N18189), is suggested.

G-PCC performs the encoding of positional information (geometry) that is indicated by three-dimensional coordinates for each point of point cloud data, and attribute information (attributes) such as time stamps, intensities, and the like with different processes for each.

In addition, for example, Japanese Unexamined Patent Application, First Publication No. 2018-116452 discloses a data compressing apparatus that generates parameters for making measurement data more closely resemble a template that indicates a shape of a geographical feature in relation to measurement data that has been obtained using LiDAR to serve as compression data.

However, in the method that has been disclosed in the above publication 1, in a case in which the LiDAR has a complicated scanning path, the difference in values between the azimuth angle and the angle of elevation that have been predicted from previous scans, and the azimuth angle and angle of elevation for the next scan will be large, and the compression efficiency at the time of encoding will decrease. In addition, in the method of Japanese Unexamined Patent Application, First Publication No. 2018-116452, templates showing the shape of geographical features are necessary, and therefore, it is easy for this to be influenced by the surrounding environment.

SUMMARY OF THE INVENTION

The encoding apparatus according to one aspect of the present application comprises an acquisition unit configured to acquire point cloud data consisting of a plurality of measurement points from a measurement unit; a calculating unit configured to calculate predicted points corresponding to the plurality of measured points based on measurement model information relating to a measurement pattern of the measurement unit; a difference calculating unit configured to calculate differences between the predicted points corresponding to the measured points and the measured points; and an encoding unit configured to encode the differences.

Further features of the present invention will become apparent from the following description of embodiments with reference to the attached drawings.

BRIEF DESCRIPTION OF THE DRAWINGS

FIG. 1 is a functional block diagram showing a processing example for G-PCC encoding according to a First Embodiment of the present invention.
FIG. 2 is a functional block diagram explaining encoding processing for predictive coding according to the First Embodiment of the present invention.
FIG. 3 is a diagram explaining an example of processing that is performed by a position prediction module 203 and a difference calculating module 204 for the predictive coding according to the First Embodiment of the present invention.
FIG. 4 is a diagram explaining an example of a tree that is generated using angular coding mode according to the First Embodiment of the present invention.
FIG. 5 is a functional block diagram explaining processing for G-PCC decoding according to the First Embodiment of the present invention.
FIG. 6 is a functional block diagram explaining decoding processing for predicative encoding according to the First Embodiment of the present invention.
FIG. 7 is a diagram showing an example of a LiDAR scanning path for measuring an encoding target in the First Embodiment of the present invention.

FIG. 8 is a functional block diagram showing a simplified configurational example of a point cloud encoding apparatus 800 according to the First Embodiment of the present invention.

FIG. 9 is a functional block diagram showing a simplified configurational example of a point cloud decoding apparatus 900 according the First Embodiment of the present invention.

FIG. 10 is a diagram showing one example of an angle model according to the First Embodiment of the present invention.

FIG. 11 is a functional block diagram showing a simplified configurational example of an angle information encoding apparatus according to the First Embodiment of the present invention.

FIG. 12 is a functional block diagram showing a simplified configurational example of an angle information decoding apparatus according to the First Embodiment of the present invention.

FIG. 13 is a flowchart showing an example of processing for an angle calculating unit 1102 according to the First Embodiment of the present invention.

FIG. 14 is a flowchart showing an example of processing for an angle calculating unit 1203 according to the First Embodiment of the present invention.

FIG. 15 is a flowchart showing an example of processing for an azimuth angle/ angle of elevation difference calculating unit 1103 according to the First Embodiment of the present application.

FIG. 16 is a flowchart showing an example of processing for an azimuth angle/ angle of elevation calculating unit 1204 according to the First Embodiment of the present application.

FIG. 17 is a functional block diagram showing a simplified configurational example of an angle information encoding apparatus 1700 according to a Second Embodiment of the present invention.

FIG. 18 is a functional block diagram showing a simplified configurational example of an angle information decoding apparatus 1800 according to a Second Embodiment of the present invention.

FIG. 19 is a flowchart showing an example of processing for an angle calculating unit 1702 according to the Second Embodiment of the present invention.

FIG. 20 is a flowchart showing an example of processing according to an angle calculating unit 1803 according to the Second Embodiment of the present invention.

FIG. 21 is a functional block diagram showing a simplified configurational example of an angle information encoding apparatus 2100 according to a Third Embodiment of the present invention.

FIG. 22 is a functional block diagram showing a simplified configurational example of an angle information decoding apparatus 2200 according to the Third Embodiment of the present invention.

FIG. 23 is a flowchart showing an example of processing for an angle model updating unit 2102 according to the Third Embodiment of the present invention.

FIG. 24 is a flowchart showing an example of processing for an angle model updating unit 2202 according to the Third Embodiment of the present invention.

## DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate descriptions will be omitted or simplified.

<First Embodiment>

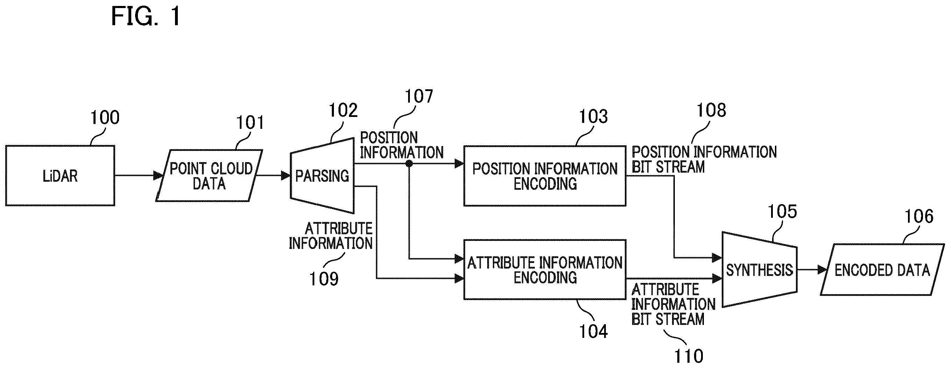

FIG. 1 is a functional block diagram showing a processing example for G-PCC encoding according to the First Embodiment of the present invention. Note that a portion of the functional blocks that are shown in FIG. 1 is realized by a CPU or the like that functions as a computer, which is not shown, that is included in the encoding apparatus executing a computer program that has been stored on a memory serving as a storage medium, which is also not shown.

However, a portion or the entirety of this may also be made so as to be realized by hardware. As this hardware, an application-specific integrated circuit (ASIC), a processor (a reconfigurable processor, a DSP), or the like can be used.

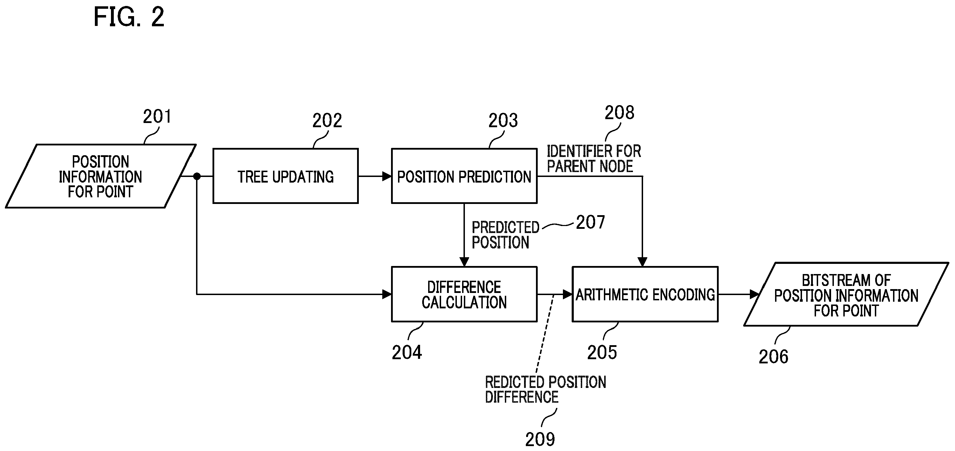

In addition, each of the functional blocks that is shown in FIG. 1 may be built into the same body, or they may also be configured by different apparatuses that are connected to each other via a signal path. Note that the above explanation in relation to FIG. 1 also applies to FIG. 2, FIG. 5, FIG. 6, FIG. 8, FIG. 9, FIG. 11, FIG. 12, FIG. 17, FIG. 18, FIG. 21, and FIG. 22.

The processing for G-PCC encoding will be explained with reference to FIG. 1. 100 is a LiDAR that irradiates a target with a laser and serves as a measurement unit, and acquires point cloud data consisting of a plurality of measurement points. Upon point cloud data 101 that has been measured by the LiDAR 100 being input, this is always parsed into position information 107 and attribute information 109 in a parsing module 102. The position information 107 is converted into a position information bitstream 108 in a position information encoding module 103.

The attribute information 109 is converted into an attribute information bitstream 110 together with the position information in an attribute information encoding module 104. After this, the position information bitstream 108 and the attribute information bitstream 110 are input into a synthesis module 105, and synthesized into encoding data 106, then output.

The position information encoding in the G-PCC position information encoding module 103 uses predictive geometry coding as the encoding method applied to the point cloud data that is output by the LiDAR.

Predictive geometry coding is a method that predicts an input point position for a point that has been input based on position information for a plurality of points that have been previously input, and encodes a difference between the predicted position and the position information for the input point.

FIG. 2 is a functional block diagram explaining encoding processing for predictive coding according to the First Embodiment of the present invention, and shows the details of the predictive geometry coding in the position information encoding module 103 from FIG. 1.

First, information for one point is retrieved from the position information 107 for the point cloud, and position information 201 for the point is obtained. The position information 201 for this point is three-dimensional coordinate information. Next, the position information 201 for the point is added to serve as a node of a tree (a prediction tree) in a tree update module 202. It is possible to arbitrarily update the tree based on the position information 201 for a point. However, typically, the positions for points corresponding to nodes are evaluated, and branches are grown that show the order of encoding between nodes that are close together.

After the tree has been updated, position predication using the tree is performed in the position prediction module 203, and a predicted position 207 and an identifier 208 for a parent node that was used in the prediction are output. The difference between the position information 201 for the point and the predicted position 207 (the predicted position difference 209) is calculated in a difference calculating module 204, and input into an arithmetic encoding module 205 along with the identifier 208 for the parent node.

The predicted position difference 209 is arithmetically encoded in the arithmetic encoding module 205 based on the identifier 208 for the parent node and output to serve as a position information bitstream 206 for the point.

Note that the smaller that the predicted position difference 209 is, the higher the encoding efficiency becomes, and the higher that the predicted position difference 209 is, the lower the encoding efficiency becomes. That is, the closer the predicted position 207 is to the position information 201 for the point, the higher the encoding efficiency becomes, and performing accurate position prediction in the position prediction module 203 becomes important in increasing the encoding efficiency.

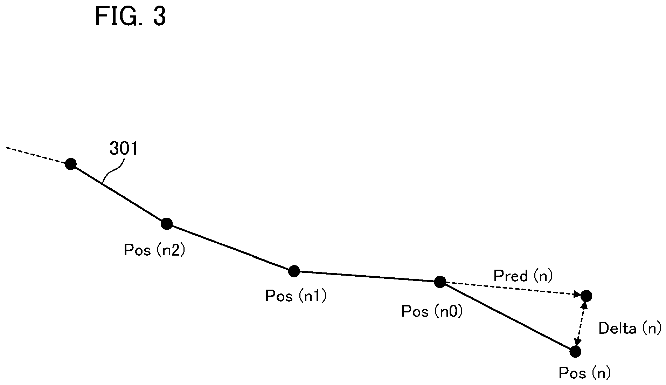

FIG. 3 is a diagram explaining an example of processing that is performed in the position prediction module 203 and the difference calculating module 204 for predictive coding according to the First Embodiment of the present invention. 301 is a tree, and n is made the node that is the prediction target, while n0 represents the parent node of n, n1 represents the parent node of n0, and n2 represents the parent node of n1.

In the position prediction module 203, when it is made such that an arbitrary node is made x, the position of x is shown using Pos(x), and the predicted position is shown using Pred(x).

At this time, predictions are performed using either one of the following prediction methods:

$$\mathrm{Pred}\,(n) = \mathrm{Pos}\,(n0) + \mathrm{Pos}\,(n0) - \mathrm{Pos}\,(n1)$$

Or

$$\mathrm{Pred}\,(n) = \mathrm{Pos}\,(n1) + \mathrm{Pos}\,(n0) - \mathrm{Pos}\,(n2)$$

wherein, Pred (n) corresponds to the predicted position 207 in FIG. 2.

Next, the difference between the predicted position and the position of the point corresponding to the node n is calculated in the difference calculating module 204. If it is made such that an arbitrary node is x, and the difference between the predicted position and the position of x is represented by Delta (x), then:

$$\mathrm{Delta}\,(n) = \mathrm{Pred}\,(n) - \mathrm{Pos}\,(n)$$

wherein Delta (n) corresponds to the predicted position difference 209 in FIG. 2.

Note that in the First Embodiment, when predictive geometry coding is applied to a point cloud that has been acquired using rotating LiDAR, an angular coding mode is applied. In the angular coding mode, three-dimensional information that combines an ID that identifies a laser, the azimuth angle, and the distance is used as the position information for a point acquired using the rotating LiDAR.

If the rotating LiDAR is the same laser, it will have a characteristic that the angle of elevation will not change, and therefore, it is possible to reduce the information amount by using an ID that identifies the laser instead of the angle of elevation.

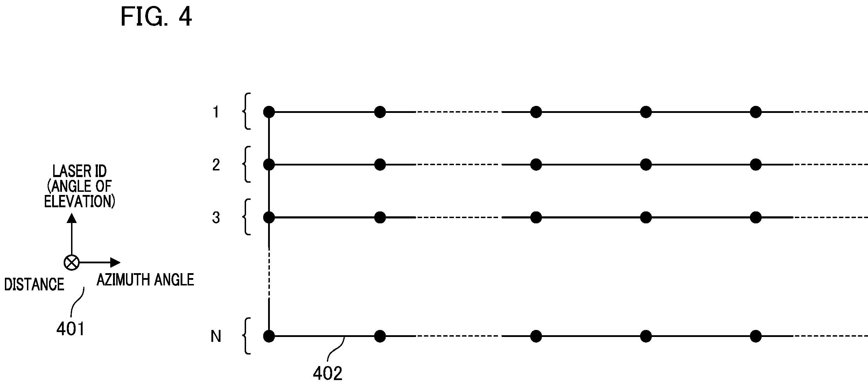

FIG. 4 is a diagram explaining an example of a tree that is generated in an angular coding mode according to the First Embodiment of the present invention.

As is shown by 401, the upwards direction of the diagram shows the ID that identifies the laser, and the right to left direction shows the azimuth angle, while the direction from the front to back shows the distance. 1 - N in FIG. 4 show the laser ID, and as is shown in 402, the points that have been acquired by each laser are added to nodes such that they have points that were acquired by a laser with the same ID as their parents, and the tree is grown in this manner.

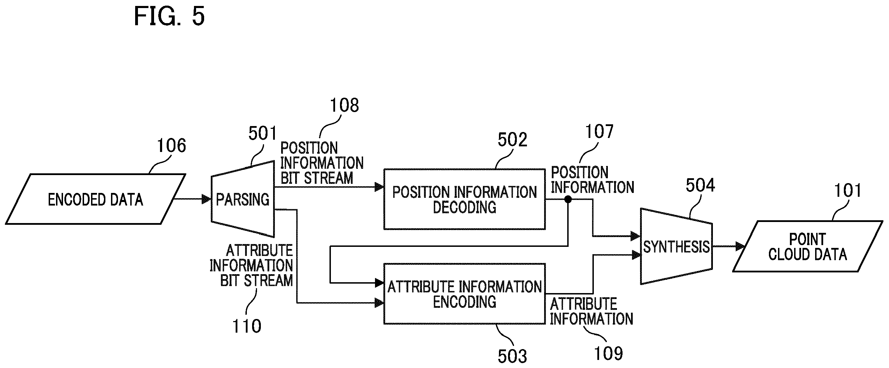

FIG. 5 is a functional block diagram explaining G-PCC decoding processing according to the First Embodiment of the present invention. The encoding data 106 that has been input is parsed in the parsing module 501, and a position information bitstream 108 and an attribute information bitstream 110 are output. The position information bitstream 108 is decoded into the position information 107 in the position information decoding module 502.

The attribute information bitstream 110 is input into an attribute information decoding module 503 together with the position information bitstream 108 and is decoded into the attribute information 109. The position information 107 and the attribute information 109 are input to the synthesis module 504, and are output as point cloud data 101 that has been synthesized.

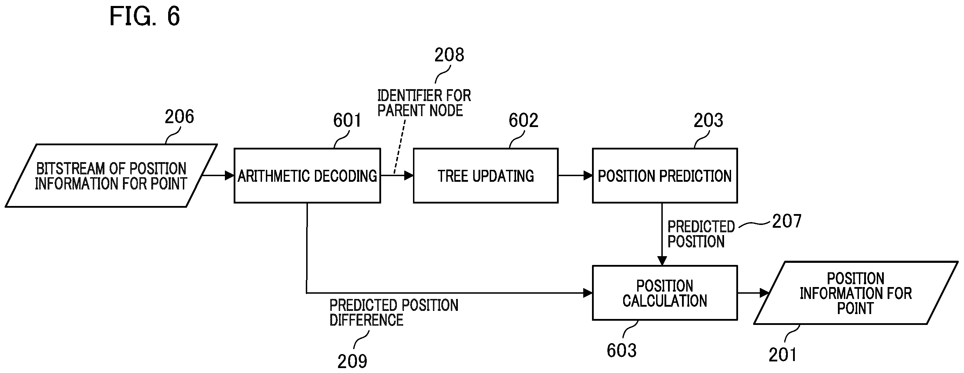

FIG. 6 is a functional block diagram explaining decoding processing for predictive coding according to the First Embodiment of the present invention, and shows a configurational example of the position information decoding module 502 that is shown in FIG. 5.

When data for one point has been extracted from the position information bitstream 108, this is called a position information bitstream 206 for a point. The position information bitstream 206 is input into the arithmetic decoding module 601, and the identifier 208 for the parent node and the predicted position difference 209 are restored.

In the tree updating module 602, the identifier 208 for the parent node is used and the parent node n0 is determined, then this node n is added as the child of n0. Next, the predicted position 207 is calculated in the position prediction module 203. After this, the position information 201 for the point is calculated from the predicted position 207 and the predicted position difference 209 in the position calculating module 603.

If the predicted position 207 is represented by Pred (n), the predicted position difference 209 is represented by Delta (n), and the position information 201 for the point is represented by Pos (n), then:

$$Pos\ (n) = Pred\ (n) + Delta\ (n)$$

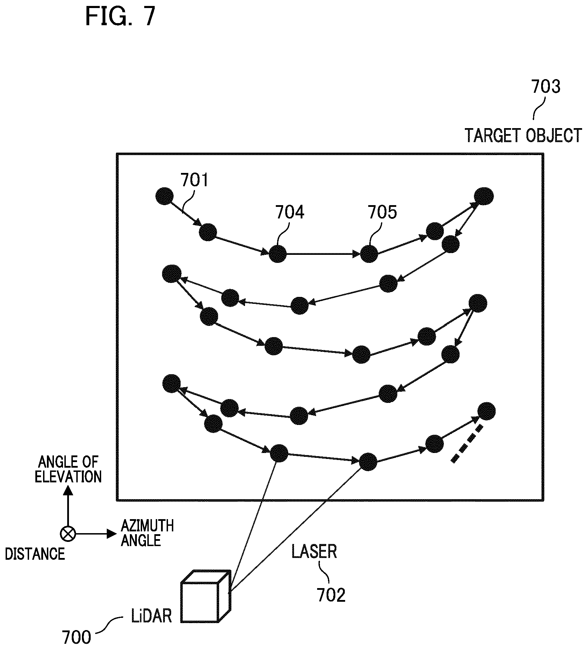

FIG. 7 is a diagram showing an example of a scanning path for LiDAR for measuring an encoding target in the First Embodiment of the present application. In the First Embodiment, a LiDAR 700 is controlled such that the azimuth angle and the angle of elevation at which a laser 702 is irradiated, using, for example, a MEMS (micro electro mechanical systems), and the like become, for example, a scanning path with the specific pattern that is shown in FIG. 7.

Note that the scanning path is not limited to a pattern such as that shown in FIG. 7, and may be any kind of pattern, In addition, in the First Embodiment, a scanning path 701 such as that in FIG. 7 is set in advance by a design value, and the azimuth angle and the angle of elevation at which the laser 702 is irradiated are adjusted, and the distance from the LiDAR 700 to a target object 703 is acquired based on reflected light information that has been acquired from the target object 703.

The irradiation of the laser is executed according to the order of unique numbers that correspond to the order in which the laser is irradiated (referred to below as a "scan ID"), and once the scan of the final scan ID has been completed, a scan of the first scan ID is executed again. For example, the point 704 represents a point for which the scan ID is an arbitrary integer n, and after the point 704 has been scanned, the point 705, for which the scan ID is n+1, is scanned. The scans are continuously executed until the operation of the LiDAR is stopped.

Each point of a point cloud that is acquired from the LiDAR includes the information for the distance, the azimuth angle, the angle of elevation, and the relative time during which scans were executed from the scan ID for the point or the scan ID = 0 (referred to below as the "scan time").

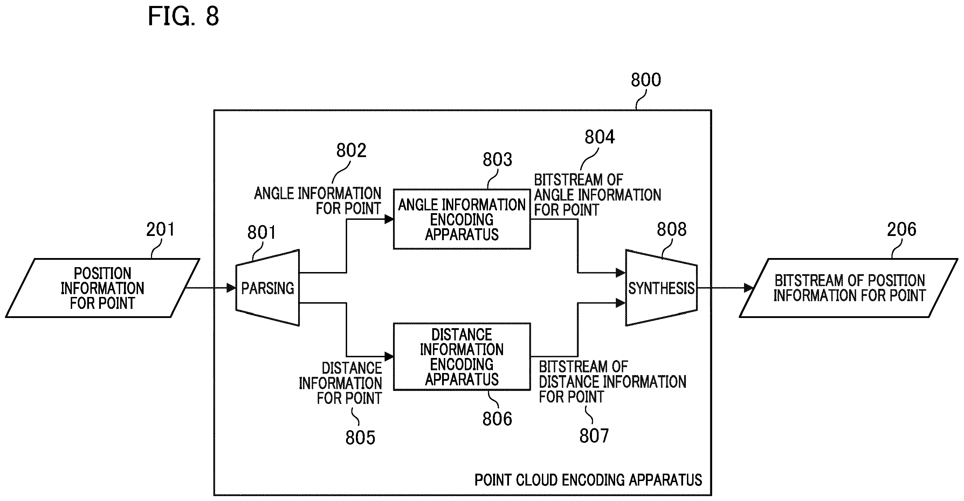

FIG. 8 is a functional block diagram showing a simplified configurational example of the point cloud encoding apparatus 800 according to the First Embodiment of the present invention. The point cloud encoding apparatus 800 has a CPU that serves as a computer, which is not shown, and a memory that serves as a storage medium on which a computer program has been stored, which is also not shown.

The parsing module 801 acquires the position information 201 for a point, and parses this into angle information 802 for the point and the distance information 805 for the point. In this context, the parsing module 801 functions as an acquisition unit configured to acquire point cloud data consisting of a plurality of measured points from a LiDAR that serves as a measuring unit.

In addition, the parsing module 801 that serves as the acquisition unit acquires point cloud data that consists of a plurality of measured points that have been generated by the LiDAR that serves as the measuring unit performing scans in which a laser is irradiated.

The angle information 802 for a point comprises the azimuth angle, the angle of elevation, and the scan ID or the scan time for the point. The angle information encoding apparatus 803 encodes the angle information 802 for the point, and outputs an angle information bitstream 804 for the point. The encoding method will be explained below.

The distance information 805 for the point includes a distance value for the point. The distance information encoding apparatus 806 implements encoding by using, for example, the method that is shown in that above publication 1 as the input of the distance information 805 for the point, and outputs a distance information bitstream 807 for the point. The synthesis module 808 synthesizes the angle information bitstream 804 and the distance information bitstream 807 for the point and outputs a position information bitstream 206 for the point.

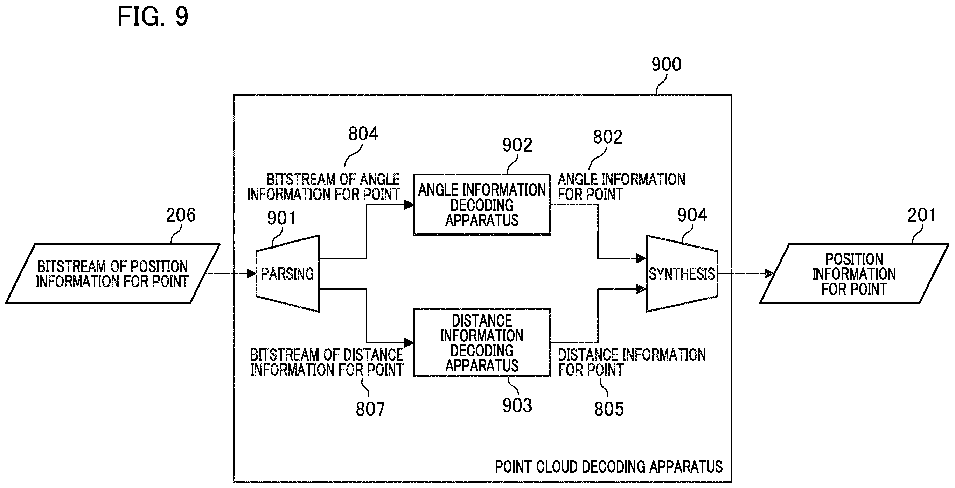

FIG. 9 is a functional block diagram showing a simplified configurational example of the point cloud decoding apparatus 900 according to the First Embodiment of the present invention. The point cloud decoding apparatus 900 has a CPU that serves as a computer and a memory that serves as a storage medium on which a computer program has been stored, which are not shown.

A parsing module 901 parses the bitstream 206 for the position information for the point into the angle information bitstream 804 for the point and the distance information bitstream 807 for the point. The angle information for the point is decoded in the angle information decoding apparatus 902, and the angle information 802 for the point is output.

The decoding method will be explained below. The distance information decoding apparatus 903 inputs the distance information bitstream 807 for the point, implements decoding using, for example, the method that is shown in the above publication 1, and outputs the distance information 805 for the point. The synthesis module 904 synthesizes the angle information 802 for the point and the distance information 805 for the point, and outputs position information 201 for the point.

Next, the details of the angle information encoding apparatus 803 and the angle information decoding apparatus 902 of the First Embodiment will be explained.

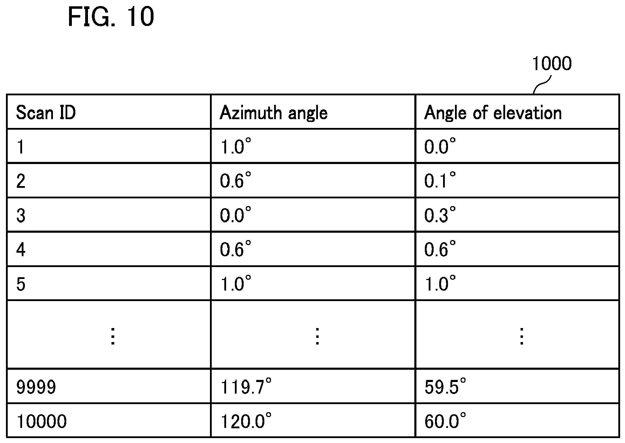

FIG. 10 is a diagram showing one example of an angle model according to the First Embodiment of the present invention. The angle model (table) in the First Embodiment has scan IDs, azimuth angles, and angles of elevation. In this context, the angle model is information that shows the path (scanning path) for when the LiDAR, which is the measuring apparatus for the point cloud, measures the point cloud.

More specifically, the angle model is an angle model that shows the azimuth angle and the angle of elevation for each point. Note that the angle model may also be information that shows a two-dimensional locus that is drawn on the surface of the measurement target by the laser light that has been irradiated by the LiDAR, which is the measurement apparatus for the point cloud, according to a scan operation.

The azimuth angle shows the angle of the horizontal direction in FIG. 7, and the angle of elevation shows the angle in the vertical direction in FIG. 7. The scan ID, azimuth angle, and angle of elevation are recorded in the same row, and it is possible to acquire the corresponding azimuth angle and angle of elevation information from the angle model by referencing the scan ID. In the First Embodiment, it is assumed that the angle information 802 for the point that is input has an azimuth angle, an angle of elevation, and a scan ID.

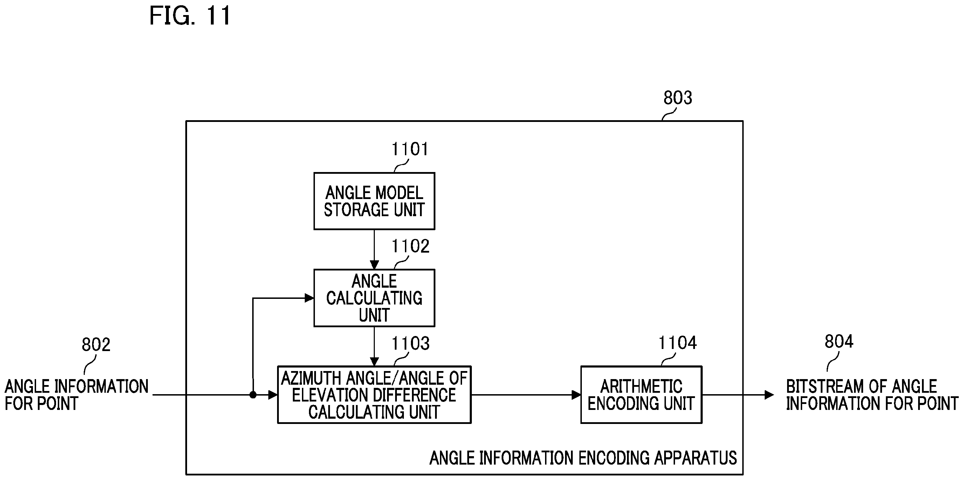

FIG. 11 is a functional block diagram showing a simplified configurational example of an angle information encoding apparatus 803 according to the First Embodiment of the present application.

The angle information encoding apparatus 803 that is shown in FIG. 11 is provided with an angle model storage unit 1101, an angle calculating unit 1102, an azimuth angle/angle of elevation difference calculating unit 1103, and an arithmetic encoding unit 1104.

The angle model storage unit 1101 records angle model data (measurement model data) based on the design values for the LiDAR that were described above. Note that the measurement model information comprises information for each point in point cloud data, and is managed using the scan ID based on a scan position or timing of the laser.

That is, the measurement model information comprises information regarding a plurality of points that have been managed by an ID based on the irradiation position of the laser or the irradiation timing of the laser at the time of a scan by the LiDAR that serves as a measurement unit. Note that in this context, instead of the actual measurement time, the scan time refers to before this, when data that hypothesized the scan in advance was acquired and made into a model.

In addition, the information for the plurality of measurement points that are stored in the angle model storage unit 1101 comprises the angle information for the laser, that is, the information for the azimuth angle and angle of elevation of the laser. That is, the information for the plurality of measurement points comprises angle information relating to the irradiation angle of the laser of the measurement unit at the time of measurement, and the measurement model information comprises angle model information relating to the irradiation angle for the laser at the time of the scan by the measurement unit.

In addition, the angle information comprises the azimuth angle and the angle of elevation for the laser at the time of measurement by the measurement unit, and the angle model information includes an azimuth angle model and an angle of elevation model for the laser at the time of the scan by the measurement unit. In addition, the irradiation timing information or the like of the laser may also be included as the irradiation time information for the laser.

That is, the information for the plurality of measurement points comprises irradiation time information showing the irradiation timing of the laser at the time of the measurement by the measurement unit, and the measurement model information comprises irradiation time model information that shows the irradiation timing of the laser at the time of the scan by the measurement unit.

The angle calculating unit 1102 extracts the values for the azimuth angle and the angle of elevation corresponding to the scan ID for the angle information 802 for the point that has been input from the angle model storage unit 1101 and outputs this to the azimuth angle/angle of elevation difference calculating unit 1103.

That is, the angle calculating unit 1102 predicts the azimuth angle and the angle of elevation for the point that has been input based on the data for the angle model, and calculates a predicted value for the azimuth angle and a predicted value for the angle of elevation. In this context, the angle calculating unit 1102 calculates predicted points corresponding to the plurality of measurement points based on the measurement model information relating to the measurement pattern of the measurement unit.

The azimuth angle/angle of elevation difference calculating unit 1103 calculates the differences between the predicted values for the azimuth angle and the angle of elevation that have been obtained from the angle calculating unit 1102 and the measured values for the azimuth angle and the angle of elevation that have been obtained from the point cloud data, and outputs the difference values that have been obtained to the arithmetic encoding unit 1104. The azimuth angle/angle of elevation difference calculating unit 1103 functions as a calculating unit configured to calculate differences between measured points and predicted points corresponding to the measured points.

The arithmetic encoding unit 1104 acquires the difference values for the azimuth angle and the angle of elevation that have been output from the azimuth angle/angle of elevation difference calculating unit calculating unit 1103 and performs arithmetic encoding. The results that are obtained are output as the angle information bitstream 804 for the point. The arithmetic encoding unit 1104 encodes the difference.

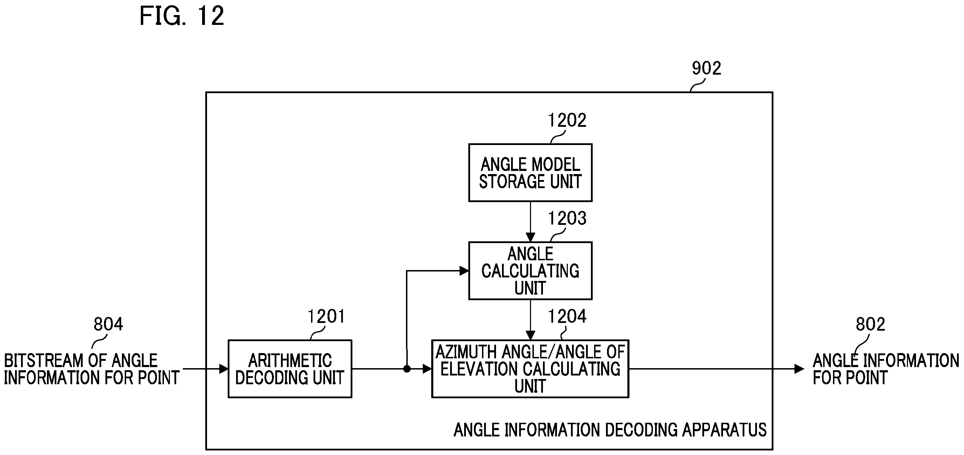

FIG. 12 is a functional block diagram showing a simplified configurational example of the angle information decoding apparatus 902 according to the First Embodiment of the present invention. The angle information decoding apparatus that is shown in FIG. 12 is provided with an arithmetic decoding unit 1201, an angle model storage unit 1202, the angle calculating unit 1203, and an azimuth angle/angle of elevation calculating unit 1204.

The arithmetic decoding unit 1201 arithmetically decodes the angle information bitstream 804 that has been output from the angle information encoding apparatus 803, outputs the scan ID to the angle calculating unit 1203, and outputs the difference values for the azimuth angle and the angle of elevation to the azimuth angle/angle of elevation calculating unit 1204.

The angle model storage unit 1202 stores angle model data based on the design values for the LiDAR that were described above.

The angle calculating unit 1203 specifies a scan ID for the difference values from the input order of the difference values for the azimuth angle and the angle of elevation that have been input, and outputs the values for the azimuth angle and the angle of elevation for the corresponding scan ID from the angle model storage unit 1202 to the azimuth angle/angle of elevation calculating unit 1204.

The azimuth angle/angle of elevation calculating unit 1204 calculates the sum of the difference values for the azimuth angle and the angle of elevation that have been acquired from the arithmetic decoding unit 1201 and the angle prediction values that have been acquired from the angle calculating unit 1203, and outputs the values for the azimuth angle and the angle of elevation as the angle information 802 for the point cloud.

In this manner, the angle information decoding apparatus 902 of the First Embodiment functions as a decoding unit configured to decode information for a measurement point based on the comparative results of measurement model information and angle information that is included in encoding data, wherein the decoding unit has measurement model information relating to measurement patterns of the measurement unit.

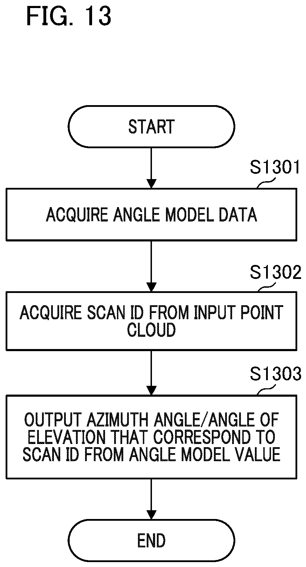

FIG. 13 is a flowchart showing a processing example for an angle calculating unit 1102 according to the First Embodiment of the present invention, and a processing example for the angle calculating unit 1102 of the angle information encoding apparatus 803 will be explained using FIG. 13. Note that the operations for each step of the flowchart in FIG. 13 are performed in order by the CPU or the like that functions as a computer, which is not shown, inside of the point cloud encoding apparatus 800 executing a computer program that has been stored on a memory.

During step S1301, the angle model is acquired from the angle model storage unit 1101. Next, during step S1302, the scan ID is acquired from the angle information for a point. Next, during step S1303, the values for the azimuth angle and the angle of elevation corresponding to the scan ID are output from the angle model, and the processing is completed.

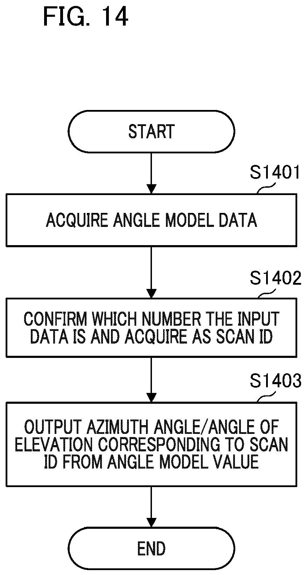

FIG. 14 is a flowchart showing a processing example for the angle calculating unit 1203 according to the First Embodiment of the present invention, and a processing example for the angle calculating unit 1203 of the angle information decoding apparatus 902 will be explained using FIG. 14. Note that the operations for each step of the flowchart in FIG. 14 are performed in order by the CPU or the like serving as the computer that is not shown inside of the point cloud decoding apparatus 900 executing a computer program that has been stored on a memory.

During step S1401, the angle model is acquired from the angle model storage unit 1202. Next, during step S1402, the scan ID is acquired from the input order of the bitstream for the angle information for the point. During step S1403, the values for the azimuth angle and the angle of elevation corresponding to the scan ID are output from the angle model values, and the processing is completed.

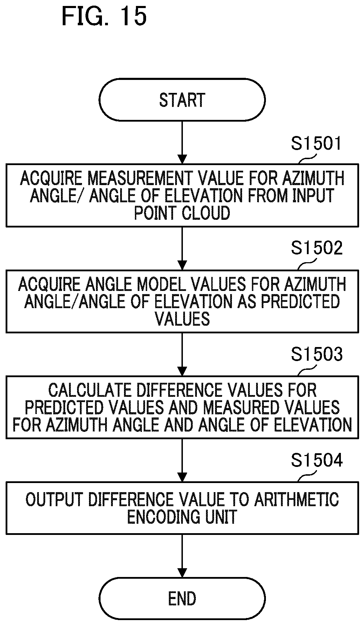

FIG. 15 is a flowchart showing a processing example for the azimuth angle and the angle of elevation difference calculating unit 1103 according to the First Embodiment of the present invention, and a processing example for the azimuth angle/angle of elevation difference calculating unit 1103 of the angle information encoding apparatus 803 will be explained using FIG. 15. Note that the operations for each step of the flowchart in FIG. 15 are performed in order by the CPU or the like that is not shown that serves as a computer inside of the point cloud encoding apparatus 800 executing a computer program that has been stored on a memory.

During step S1501, the measured values for the azimuth angle and the angle of elevation for the angle information for the point that has been input are acquired. Next, during step S1502, the scan ID corresponding to the azimuth angle and the angle of elevation that have been input is extracted from the point cloud data, and the values for the azimuth angle and the angle of elevation corresponding to the scan ID are acquired from the angle model to serve as the predicted values.

Next, during step S1503, the differences between the measured values and the calculated values for the azimuth angle and the angle of elevation are calculated, then during step S1504, the difference values are output to the arithmetic encoding unit 1104, and the processing is completed.

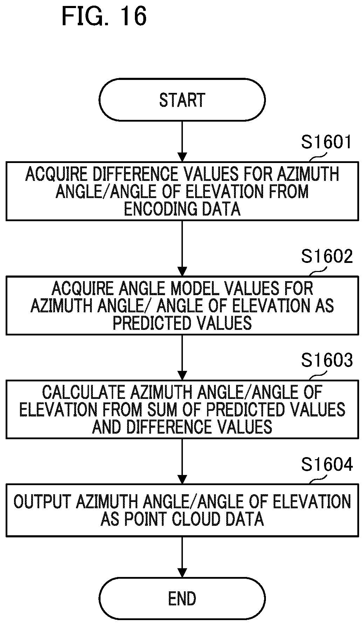

FIG. 16 is a flowchart showing a processing example of the azimuth angle/ angle of elevation calculating unit 1204 according to the First Embodiment of the present invention, and a processing example for the azimuth angle/angle of elevation calculating unit 1204 of the angle information decoding apparatus 902 will be explained using FIG. 16. Note that the operations for each step of the flowchart in FIG. 16 are performed in order by the CPU or the like, which is not shown, that serves as the computer inside of the point cloud decoding apparatus 900 executing a computer program that has been stored on a memory.

During step S1601, the difference values for the azimuth angle and the angle of elevation are acquired from the bitstream for the angle information that has been decoded. Next, during step S1602, the scan ID is acquired by the input order for the bitstream for the angle information for the point, and the values for the azimuth angle and the angle of elevation corresponding to the scan ID are acquired from the angle model to serve as the predicted values.

Next, during step S1603, the sums of the calculated values and the predicted values for the azimuth angle and the angle of elevation are calculated. The sums that have been obtained are output to serve as point cloud data (the azimuth angle and angle of elevation values) during step S1604, and the processing is completed.

In this manner, according to the First Embodiment, the angle information encoding apparatus 803 is able to generate an angle information bitstream for a point while maintaining the compression efficiency even if the scanning path is complicated by using an angle model (table) that is held by the angle model storage unit 1101.

In addition, the angle information decoding apparatus 902 is able to decode the angle information bitstream for a point that has been created by the angle information encoding apparatus 803 by using an angle model (table) that is held by the angle model storage unit 1202. Therefore, it is possible to obtain point cloud encoding data with a high compression efficiency.

<Second Embodiment>

Next, a Second Embodiment of the present invention will be explained. The angle model in the Second Embodiment has displacement information for the azimuth angle and the angle of elevation for a scan that has been obtained based on design values for the LiDAR.

Furthermore, in the angle model in the Second Embodiment, it is assumed that an integer that can output the azimuth angle information and the angle of elevation information for the point cloud serves as the input of the scan time. In the Second Embodiment, it is assumed that the angle information for the point that is input includes the azimuth angle, the angle of elevation, and the scan time.

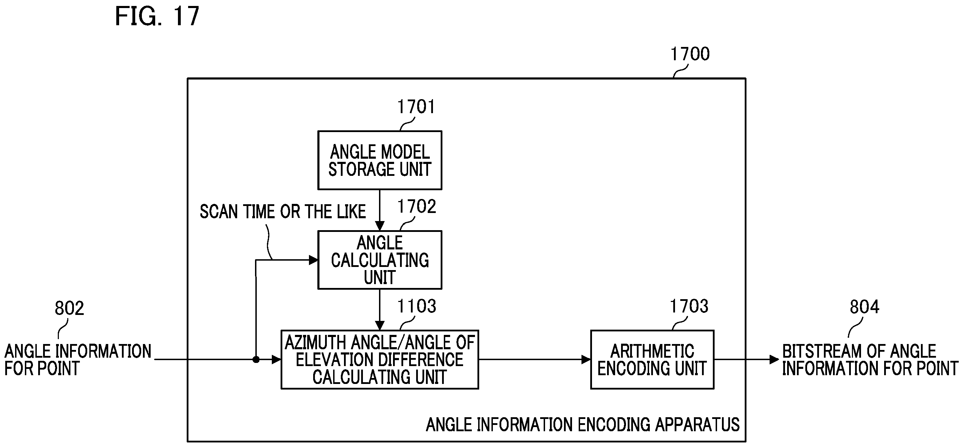

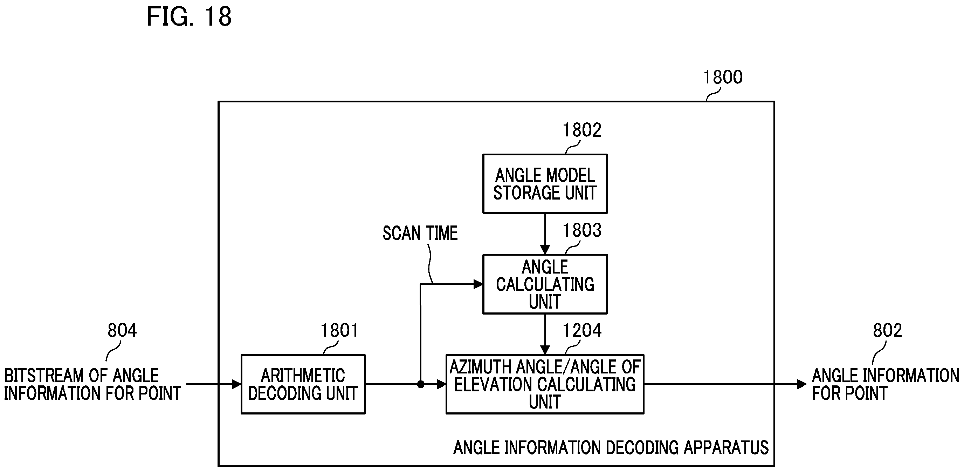

FIG. 17 is a functional block diagram showing a simplified configurational example of the angle information encoding apparatus 1700 according to the Second Embodiment of the present invention, and FIG. 18 is a functional block diagram showing a simplified configurational example of an angle information decoding apparatus 1800 according the Second Embodiment of the present invention. Although the configurations of FIG. 17, and FIG. 18 are the same as the configurations of FIG. 11 and FIG. 12, they differ on the point that they handle the scan time.

Below, a system configuration diagram according to the Second Embodiment of the present invention will be explained with reference to FIG. 17, and FIG. 18. The angle information encoding apparatus 1700 that is shown in FIG. 17 is provided with an angle model storage unit 1701, an angle calculating unit 1702, the azimuth angle/angle of elevation difference calculating unit 1103, and the arithmetic encoding unit 1104. Note that in the Second Embodiment, it is assumed that the point data that is input has the distance, the azimuth angle, the angle of elevation, and the scan time.

The angle model storage unit 1701 has information for displacement in relation to the time for the azimuth angle and angle of elevation directions for a scan based on the design of the LiDAR. The displacement information may also be, for example, information that shows displacement in the azimuth angle or angle of elevation direction at a predetermined time. In addition, the displacement information may also be, for example, information that shows displacement in the azimuth angle and angle of elevation directions, which change non-linearly in relation to predetermined changes in time.

The angle calculating unit 1702 outputs the scan time for the point cloud that has been input, and the azimuth angle information and angle of elevation information that have been calculated from displacement information per time for the azimuth angle and angle of elevation that are held in the angle model storage unit 1701 to the azimuth angle/angle of elevation difference calculating unit 1103.

The arithmetic encoding unit 1703 acquires the difference values for the azimuth angle and the angle of elevation that have been output from the azimuth angle/angle of elevation difference calculating unit 1103 and the scan time for the angle information 802 for the point and performs arithmetic encoding. The obtained result is output as the angle information bitstream 804 for the point.

The angle information decoding apparatus 1800 that is shown in FIG. 18 is provided with an arithmetic decoding unit 1801, an angle model storage unit 1802, an angle calculating unit 1803, and an azimuth angle/angle of elevation calculating unit 1204.

The arithmetic decoding unit 1801 arithmetically decodes the angle information bitstream 804 for the point that was output from the angle information encoding apparatus 1700, then outputs the scan time to the angle calculating unit 2803, and outputs the difference values for the azimuth angle and the angle of elevation to the azimuth angle/angle of elevation calculating unit 1204.

The angle model storage unit 1802 has displacement information for the azimuth angle and the angle of elevation corresponding to the time for the scan based on the LiDAR design. The displacement information may also be, for example, information that shows the displacement of the azimuth angle and the angle of elevation per a predetermined time. In addition, the displacement information may also be, for example, information that shows the displacement of the azimuth angle and the angle of elevation that change non-linearly in relation to pre-determined changes in time.

The angle calculating unit 1803 outputs the scan time for the angle information bitstream for the point and the azimuth angle and angle of elevation information that has been calculated from the displacement information per time for the azimuth angle and the angle of elevation that is held in the angle model storage unit 1802 to the azimuth angle/angle of elevation calculating unit 1204.

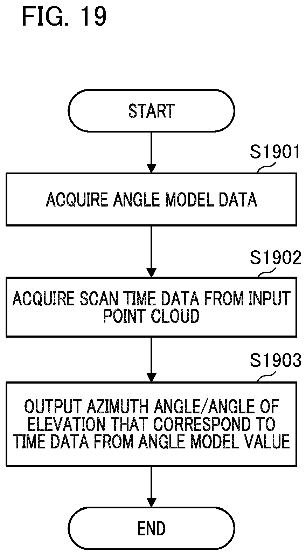

FIG. 19 is a flowchart showing a processing example for the angle calculating unit 1702 according to the Second Embodiment of the present invention, and a processing example for the angle calculating unit 1702 of the angle information encoding unit 1700 will be explained using FIG. 19. Note that the operations for each step of the flowchart in FIG. 19 are performed in order by a CPU or the like that serves as a computer, which is not shown, inside of the point cloud encoding apparatus 800 executing a computer program that has been stored on a memory.

During step S1901, the angle model data is acquired from the angle model storage unit 1701. Next, during step S1902, the scan time data is acquired from the angle information for the point that has been input. During Step S1903, the scan time is input into the angle model, the values for the azimuth angle and the angle of elevation that are returned are output, and the processing is completed.

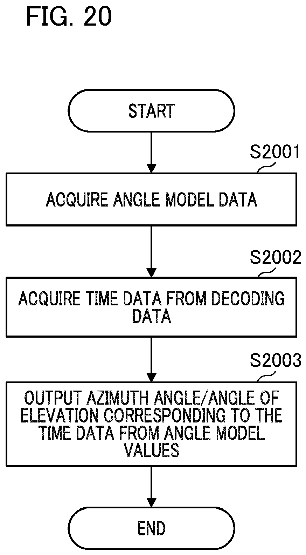

FIG. 20 is a flowchart showing a processing example for the angle calculating unit 1803 according to the Second Embodiment of the present invention, and a processing example for the angle calculating unit 1803 of the angle information decoding apparatus 1800 will be explained using FIG. 20. Note that the operations for each step of the flowchart in FIG. 20 are performed in order by a CPU or the like that serves as a computer that is not illustrated in the point cloud decoding apparatus 900 executing a computer program that has been stored on a memory.

During step S2001, the angle model data is acquired from the angle model storage unit 1802. Next, during step S2002, the scan time is acquired from the angle information bitstream 804 for the point. During step S2003, the scan time is input into the angle model, the values for the azimuth angle and the angle of elevation that have been obtained are output, and the processing is completed.

In this manner, according to the Second Embodiment, the angle information encoding apparatus 1700 is able to generate a bitstream for the angle information for a point while maintaining compression efficiency without being dependent on the complexity of the scanning path by using an angle model held by the angle model storage unit 1701.

The angle information decoding apparatus 1800 is able to decode the bitstream for the angle information for the point that has been created in the angle information encoding apparatus 1700 by using the angle model held by the angle model storage unit 1802. In addition, it becomes possible to handle point cloud encoding data with a high compression efficiency.

<Third Embodiment>

Below, a Third Embodiment of the present invention will be explained. Although a LiDAR scan operates using values that have been determined in advance by design values, there are cases in which the scanning path changes from the design values due to the temperature inside of the device, time-related degradation, or the like of the drive system such as a MEMS, or the like.

When the above situation occurs, the differences between the angle information from the angle model storage unit 1101 and the measured values for the angles will increase in the First Embodiment, and the encoding efficiency will thereby decrease.

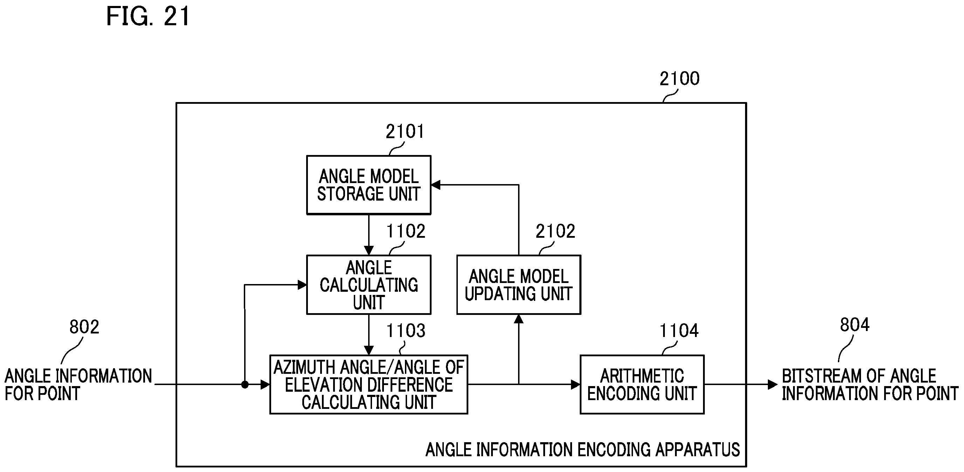

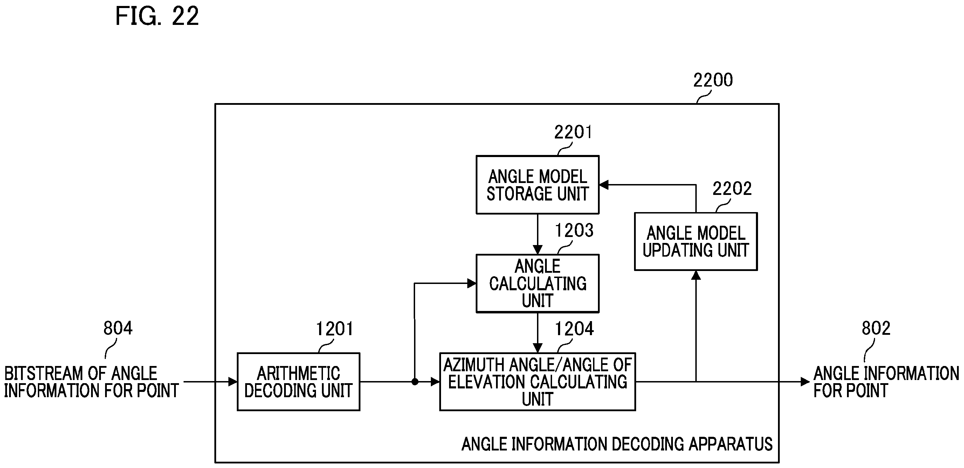

FIG. 21 is a functional block diagram showing a simplified configuration example of an angle information encoding apparatus 2100 according to a Third Embodiment of the present invention, and FIG. 22 is a functional block diagram showing a simplified configurational example of an angle information decoding apparatus 2200 according to the Third Embodiment of the present invention. Note that in the Third Embodiment, it is assumed that the point cloud data that is input has the information for the distance, azimuth angle, angle of elevation, and scan ID.

The angle information encoding apparatus 2100 that is shown in FIG. 21 is provided with an angle model storage unit 2101, an angle calculating unit 1102, an azimuth angle/angle of elevation difference calculating unit 1103, the arithmetic encoding unit 1104, and an angle model updating unit 2102.

The angle model storage unit 2101 stores an angle model 1000 based on the above-described design values for the LiDAR. In addition, the angle model storage unit 2101 updates the information for the target of the angle model 1000 in cases in which there has been an input from the angle model updating unit 2102.

The angle model updating unit 2102 references the difference values that have been obtained from the azimuth angle/angle of elevation difference calculating unit 1103 and updates the information for the target of the angle model storage unit 2101 in a case in which update determination conditions are fulfilled. In this context, the angle model updating unit 2102 functions as a correction unit configured to correct measurement model information based on differences between measurement model information and the angles of a measured point. Note that the update determination processing will be described below.

The angle information decoding apparatus 2200 that is shown in FIG. 22 is provided with the arithmetic decoding unit 1201, an angle model storage unit 2201, the angle calculating unit 1203, an azimuth angle/angle of elevation calculating unit 1204, and an angle model updating unit 2202.

The angle model storage unit 2201 stores the above-described angle model 1000. In addition, the angle model storage unit 2201 updates the information for the target of the angle model in a case in which there has been an input from the angle model updating unit 2202.

The angle model updating unit 2202 references the values for the azimuth angle and the angle of elevation that have been obtained from the azimuth angle/angle of elevation calculating unit 1204, and the values for the azimuth angle and the angle of elevation that are stored in the angle model storage unit 2201, and updates the information for the subject of the angle model storage unit 2201 in a case in which update determination conditions are fulfilled. In this context, the angle model updating unit 2202 functions as a correction unit configured to correct measurement model information based on differences between measurement model information and angles for a measured point. Note that the update determination will be described below.

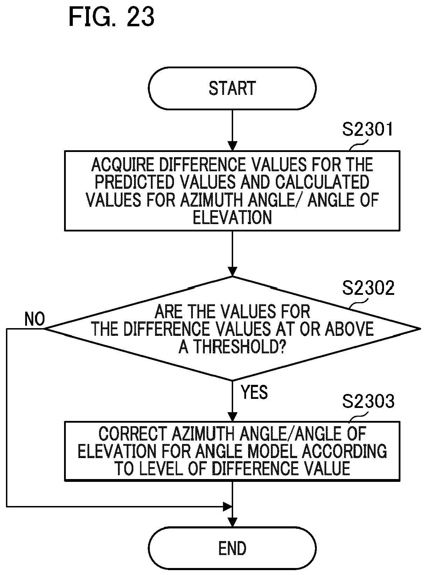

FIG. 23 is a flowchart that shows a processing example for the angle model updating unit 2102 according to the Third Embodiment of the present application, and a processing example for the angle model updating unit 2102 will be explained using FIG. 23. Note that the operations for each step of the flowchart in FIG. 23 are performed in order by a CPU or the like that serves as a computer that is not shown inside of the point cloud encoding apparatus 800 executing a computer program that has been stored on a memory.

During step S2301, the difference values between the predicted values and the measured values for the azimuth angle and the angle of elevation that have been obtained from the azimuth angle/angle of elevation calculating unit are acquired. During step S2302, it is determined whether or not the acquired difference values are at or above a predetermined threshold. In a case in which it has been determined during step S2302 that these values are less than the predetermined threshold, the processing for FIG. 23 is completed.

During step S2302, in a case in which it has been determined that the difference values that were acquired are at or above the predetermined threshold, the processing proceeds to step S2303. Next, the azimuth angle and the angle of elevation for the corresponding scan ID that are stored in the angle model storage unit are corrected according to the level of the difference values, and the processing for FIG. 23 is completed.

Note that during step S2303, correction is performed by, for example, adding the difference values to the corresponding values for the azimuth angle and the angle of elevation in the angle model storage unit. In addition, the next time, in a case in which the point cloud data for the same scan ID is input, the azimuth angle/angle of elevation calculating unit performs predictions using the values that have been corrected.

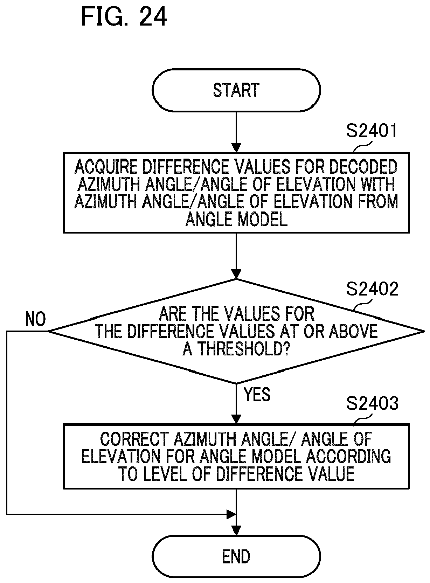

FIG. 24 is a flowchart showing a processing example for the angle model updating unit 2202 according to the Third Embodiment of the present invention, and a processing example for the angle model updating unit 2202 will be explained using FIG. 24. Note that the operations for each step of the flowchart in FIG. 24 are performed in order by a CPU or the like, which is not shown, that serves as a computer inside of the point cloud decoding apparatus 900 executing a computer program that has been stored on a memory.

During step S2401, the values for the azimuth angle and the angle of elevation that have been obtained from the azimuth angle/angle of elevation calculating unit are decoded, and the azimuth angle and angle of elevation that have been stored on the angle model storage unit are acquired and the differences are calculated. During step S2402, it is determined whether or not the differences that have been obtained are at or above a predetermined threshold.

During step S2402, in a case in which it has been determined that the difference values are less than the predetermined threshold, the processing for FIG. 24 is completed. In a case in which, during step S2402, it has been determined that the difference values are at or above the predetermined threshold, the processing proceeds to step S2403, the azimuth angle and the angle of elevation for the scan ID that are stored in the angle model storage unit are corrected according to the level of the difference values, and the processing for FIG. 24 is completed.

During step S2403, correction is performed by, for example, adding half of the value of the difference values to the values for the corresponding azimuth angle and angle of elevation in the angle model storage unit 2201. In addition, the next time, in a case in which the decoding data for the same scan ID is input, the azimuth angle/angle of elevation predicting unit performs prediction using the values that have been corrected.

Note that during step S2302 and step S2402, the update determination is executed using the same predetermined threshold, and during step S2303 and step S403, the values for the azimuth angle and angle of elevation are corrected using the same correction process.

In this manner, according to the Third Embodiment, the angle models for the angle model storage unit 2101 of the angle information encoding unit 2100 and the angle model storage unit 2201 of the angle information decoding unit 2200 are updated in synchronization. Therefore, even in a case in which the scanning path has changed due to the influence of temperature or the like, it is possible to obtain encoding data with a high compression efficiency.

Note that in the Third Embodiment, it may also be made such that, for example, a temperature sensor is provided, and the angle model storage unit is made to store a table or an integer that includes the temperature as a parameter, and the angle model is changed according to a temperature that has been detected by the temperature sensor.

In addition, although in the First Embodiment to the Third Embodiment, an example of a table such as that shown in FIG. 10 has been given as an example of the angle model, the angle model may also be an integer, and the angle model storage unit may also store an integer.

In addition, although in the above First Embodiment to the Third Embodiment, encoding is performed, for example, by using an angle model, it may also be made such that the encoding is performed by, for example, combining the encoding that is shown in FIG. 2 with an angle model. In addition, with respect to the decoding, the decoding may also be performed by combining the decoding that is shown in FIG. 6 with an angle model.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the encoding apparatus or the like through a network or various storage media. Then, a computer (or a CPU, an MPU, or the like) of the encoding apparatus or the like may be configured to read and execute the program. In such a case, the program and the storage medium storing the program configure the present invention.

In addition, the present invention includes those realized using for example, at least one processor or circuit configured to perform functions of the embodiments explained above. Dispersion processing may be performed using a plurality of processors.

This application claims the benefit of priority from Japanese Patent Application No. 2023-077766, filed on May 10, 2023, which is hereby incorporated by reference herein in its entirety.

## Claims

1. An encoding apparatus comprising:

   an acquisition unit configured to acquire point cloud data consisting of a plurality of measured points from a measurement unit;
   a calculating unit configured to calculate predicted points in relation to the plurality of measured points based on measurement model information relating to a measurement pattern of the measurement unit;
   a difference calculating unit configured to calculate differences between the measured points and the predicted points corresponding to the measured points; and
   an encoding unit configured to encode the difference.

2. The encoding apparatus according to claim 1, wherein the acquisition unit acquires the point cloud data that consists of the plurality of measured points that have been generated by the measurement unit performing a scan by irradiating a laser.

3. The encoding apparatus according to claim 2, wherein the measurement model information comprises information relating to a plurality of points that have been managed using an ID based on an irradiation position of the laser or an irradiation timing of the laser when the measurement unit performs the scan.

4. The encoding apparatus according to any one of claims 2 and 3, wherein the information for the plurality of measured points comprises angle information relating to an angle of irradiation of the laser when the measurement unit performs measurement; and
   the measurement model information comprises angle model information relating to the angle of irradiation of the laser when the measurement unit performs the scan.

5. The encoding apparatus according to claim 4, wherein

the angle information comprises an azimuth angle and an angle of elevation for a laser when the measurement unit performs measurement; and

the angle model information comprises an azimuth angle model and an angle of elevation model for the laser when the measurement unit performs the scan.

6. The encoding apparatus according to any one of claims 2 to 5, wherein

the information for the plurality of measured points comprises irradiation time information showing an irradiation timing of the laser when the measurement unit performs measurement; and

the measurement model information comprises an irradiation time model showing an irradiation timing of the laser from when the measurement unit performs the scan.

7. The encoding apparatus according to any one of claims 1 to 6, further comprising a correcting unit configured to correct the measurement model information based on a difference in angles between the measurement model information and the measured points.

8. A decoding apparatus comprising a decoding unit that has measurement model information relating to a measurement pattern of a measurement unit, and that is configured to decode information for measured points based on comparative results of the measurement model information and angle information that is included in encoding data.

9. The decoding apparatus according to claim 9, wherein the decoding apparatus has an acquisition unit configured to acquire point cloud data that consists of the plurality of measured points that have been generated by the measurement unit performing a scan in which a laser is irradiated.

10. The decoding apparatus according to claim 10, wherein

the information for the plurality of measured points comprises angle information relating to an irradiation angle of the laser when the measuring unit performs measurement; and

the measurement model information comprises angle model information relating to the irradiation angle of the laser when the measurement unit performs the scan.

11. The decoding apparatus according to claim 11, wherein

the angle information comprises an azimuth angle and an angle of elevation for the laser when the measurement unit performs measurement; and

the angle model information comprises an azimuth angle model and an angle of elevation model for the laser when the measurement unit performs the scan.

12. The decoding apparatus according to any one of claims 10 to 12, wherein

the information for the plurality of measured points comprises irradiation time information showing an irradiation timing of the laser when the measurement unit performs measurement; and

the measurement model information comprises irradiation time model information showing the irradiation timing of the laser when the measurement unit performs the scan.

13. The decoding apparatus according to claim 9, wherein the decoding apparatus has a correction unit configured to correct the measurement model information based on differences between the measurement model information and angles of the measured points.

14. A non-transitory computer-readable storage medium configured to store a computer program for an encoding apparatus, comprising instruction for executing the following processes:

acquiring point cloud data that consists of a plurality of measured points from a measurement unit;
calculating predicted points corresponding to the plurality of measured points based on measurement model information relating to a measurement pattern of the measurement unit;
calculating differences between the measured points and the predicted points corresponding to the measured points; and
encoding the differences.

15. A non-transitory computer-readable storage medium configured to store a computer program for a decoding apparatus, comprising instructions for executing the following processes:
having a measurement model relating to a measurement pattern of the measurement unit, and encoding information for measured points based on comparative results of the measurement model information and angle information that is included in encoded data.

FIG. 1

100 LiDAR

101 POINT CLOUD DATA

102 PARSING

107 POSITION INFORMATION

109 ATTRIBUTE INFORMATION

103 POSITION INFORMATION ENCODING

104 ATTRIBUTE INFORMATION ENCODING

108 POSITION INFORMATION BIT STREAM

110 ATTRIBUTE INFORMATION BIT STREAM

105 SYNTHESIS

106 ENCODED DATA

FIG. 2

FIG. 3

# FIG. 4

# FIG. 5

FIG. 6

FIG. 7

FIG. 8

POINT CLOUD ENCODING APPARATUS

FIG. 9

EP 4 462 784 A1

FIG. 10

1000

| Scan ID | Azimuth angle | Angle of elevation |
|---------|---------------|--------------------|
| 1 | 1.0° | 0.0° |
| 2 | 0.6° | 0.1° |
| 3 | 0.0° | 0.3° |
| 4 | 0.6° | 0.6° |
| 5 | 1.0° | 1.0° |
| ⋮ | ⋮ | ⋮ |
| 9999 | 119.7° | 59.5° |
| 10000 | 120.0° | 60.0° |

FIG. 11

EP 4 462 784 A1

803

1101

ANGLE MODEL
STORAGE UNIT

1102

ANGLE
CALCULATING
UNIT

802

ANGLE INFORMATION
FOR POINT

1103

AZIMUTH ANGLE/ANGLE OF
ELEVATION DIFFERENCE
CALCULATING UNIT

1104

ARITHMETIC
ENCODING UNIT

804

BITSTREAM OF ANGLE
INFORMATION FOR POINT

ANGLE INFORMATION ENCODING APPARATUS

FIG. 12

EP 4 462 784 A1

# FIG. 13

```
            START

         ┌──────────────────────────┐   S1301
         │ ACQUIRE ANGLE MODEL DATA │
         └──────────────────────────┘

         ┌──────────────────────────┐   S1302
         │ ACQUIRE SCAN ID FROM INPUT POINT │
         │            CLOUD            │
         └──────────────────────────┘

         ┌──────────────────────────┐   S1303
         │ OUTPUT AZIMUTH ANGLE/ANGLE OF │
         │ ELEVATION THAT CORRESPOND TO │
         │ SCAN ID FROM ANGLE MODEL VALUE │
         └──────────────────────────┘

             END
```

# FIG. 14

```
                    ┌─────────────────┐
                    │      START      │
                    └────────┬────────┘
                             │
                             ▼                    S1401
              ┌──────────────────────────────┐
              │    ACQUIRE ANGLE MODEL DATA   │
              └───────────────┬──────────────┘
                              │
                              ▼                   S1402
              ┌──────────────────────────────┐
              │  CONFIRM WHICH NUMBER THE INPUT │
              │  DATA IS AND ACQUIRE AS SCAN ID │
              └───────────────┬──────────────┘
                              │
                              ▼                   S1403
              ┌──────────────────────────────┐
              │  OUTPUT AZIMUTH ANGLE/ANGLE OF │
              │ ELEVATION CORRESPONDING TO SCAN│
              │   ID FROM ANGLE MODEL VALUE    │
              └───────────────┬──────────────┘
                              │
                              ▼
                    ┌─────────────────┐
                    │       END       │
                    └─────────────────┘
```

# FIG. 15

```
START
```

↓

**S1501**

ACQUIRE MEASUREMENT VALUE FOR AZIMUTH ANGLE/ ANGLE OF ELEVATION FROM INPUT POINT CLOUD

↓

**S1502**

ACQUIRE ANGLE MODEL VALUES FOR AZIMUTH ANGLE/ANGLE OF ELEVATION AS PREDICTED VALUES

↓

**S1503**

CALCULATE DIFFERENCE VALUES FOR PREDICTED VALUES AND MEASURED VALUES FOR AZIMUTH ANGLE AND ANGLE OF ELEVATION

↓

**S1504**

OUTPUT DIFFERENCE VALUE TO ARITHMETIC ENCODING UNIT

↓

```
END
```

# FIG. 16

```
          ┌─────────────┐
          │    START    │
          └─────────────┘
                 │
                 ▼                          S1601
┌──────────────────────────────────────┐
│  ACQUIRE DIFFERENCE VALUES FOR AZIMUTH │
│    ANGLE/ANGLE OF ELEVATION FROM       │
│           ENCODING DATA                │
└──────────────────────────────────────┘
                 │
                 ▼                          S1602
┌──────────────────────────────────────┐
│     ACQUIRE ANGLE MODEL VALUES FOR     │
│  AZIMUTH ANGLE/ ANGLE OF ELEVATION AS  │
│           PREDICTED VALUES             │
└──────────────────────────────────────┘
                 │
                 ▼                          S1603
┌──────────────────────────────────────┐
│  CALCULATE AZIMUTH ANGLE/ANGLE OF      │
│ ELEVATION FROM SUM OF PREDICTED VALUES │
│         AND DIFFERENCE VALUES          │
└──────────────────────────────────────┘
                 │
                 ▼                          S1604
┌──────────────────────────────────────┐
│ OUTPUT AZIMUTH ANGLE/ANGLE OF ELEVATION│
│         AS POINT CLOUD DATA            │
└──────────────────────────────────────┘
                 │
                 ▼
          ┌─────────────┐
          │     END     │
          └─────────────┘
```

FIG. 17

EP 4 462 784 A1

FIG. 18

EP 4 462 784 A1

# FIG. 19

```
        ╭──────────────╮
        │    START     │
        ╰──────┬───────╯
               │           S1901
               ▼
  ┌────────────────────────────┐
  │  ACQUIRE ANGLE MODEL DATA   │
  └────────────┬───────────────┘
               │           S1902
               ▼
  ┌────────────────────────────┐
  │ ACQUIRE SCAN TIME DATA FROM │
  │ INPUT POINT CLOUD           │
  └────────────┬───────────────┘
               │           S1903
               ▼
  ┌────────────────────────────┐
  │ OUTPUT AZIMUTH ANGLE/ANGLE  │
  │ OF ELEVATION THAT CORRESPOND│
  │ TO TIME DATA FROM ANGLE     │
  │ MODEL VALUE                 │
  └────────────┬───────────────┘
               │
               ▼
        ╭──────────────╮
        │     END      │
        ╰──────────────╯
```

# FIG. 20

```
        START
          |
          v
ACQUIRE ANGLE MODEL DATA          S2001
          |
          v
ACQUIRE TIME DATA FROM DECODING   S2002
          DATA
          |
          v
OUTPUT AZIMUTH ANGLE/ANGLE OF     S2003
ELEVATION CORRESPONDING TO THE
TIME DATA FROM ANGLE MODEL
          VALUES
          |
          v
         END
```

FIG. 21

ANGLE INFORMATION ENCODING APPARATUS

802 ANGLE INFORMATION FOR POINT

804 BITSTREAM OF ANGLE INFORMATION FOR POINT

2100

2101 ANGLE MODEL STORAGE UNIT

1102 ANGLE CALCULATING UNIT

2102 ANGLE MODEL UPDATING UNIT

1103 AZIMUTH ANGLE/ANGLE OF ELEVATION DIFFERENCE CALCULATING UNIT

1104 ARITHMETIC ENCODING UNIT

EP 4 462 784 A1

EP 4 462 784 A1

**FIG. 22**

ANGLE INFORMATION DECODING APPARATUS

804 — BITSTREAM OF ANGLE INFORMATION FOR POINT

1201 — ARITHMETIC DECODING UNIT

2200

2201 — ANGLE MODEL STORAGE UNIT

1203 — ANGLE CALCULATING UNIT

2202 — ANGLE MODEL UPDATING UNIT

1204 — AZIMUTH ANGLE/ANGLE OF ELEVATION CALCULATING UNIT

802 — ANGLE INFORMATION FOR POINT

FIG. 23

```
                    ┌──────────────┐
                    │    START     │
                    └──────┬───────┘
                           │                    S2301
         ┌─────────────────▼─────────────────┐
         │  ACQUIRE DIFFERENCE VALUES FOR THE │
         │   PREDICTED VALUES AND CALCULATED  │
         │  VALUES FOR AZIMUTH ANGLE/ ANGLE OF│
         │             ELEVATION              │
         └─────────────────┬─────────────────┘
                           │                    S2302
                    ┌──────▼──────┐
       NO      ╱────┤ ARE THE VALUES FOR      ├────╲
    ┌─────────┤  THE DIFFERENCE VALUES AT OR ABOVE  │
    │          ╲         A THRESHOLD?         ╱
    │               └──────┬──────┘
    │                      │ YES           S2303
    │     ┌────────────────▼────────────────┐
    │     │  CORRECT AZIMUTH ANGLE/ANGLE OF  │
    │     │ ELEVATION FOR ANGLE MODEL ACCORDING│
    │     │   TO LEVEL OF DIFFERENCE VALUE   │
    │     └────────────────┬────────────────┘
    │                      │
    └──────────────────────┤
                    ┌──────▼───────┐
                    │     END      │
                    └──────────────┘
```

FIG. 24

```
                    ┌─────────────┐
                    │    START    │
                    └─────────────┘
                           │
                           ▼                          S2401
      ┌──────────────────────────────────────────┐
      │ ACQUIRE DIFFERENCE VALUES FOR DECODED     │
      │ AZIMUTH ANGLE/ANGLE OF ELEVATION WITH     │
      │ AZIMUTH ANGLE/ANGLE OF ELEVATION FROM     │
      │             ANGLE MODEL                   │
      └──────────────────────────────────────────┘
                           │
                           ▼                          S2402
              ╱─────────────────────────╲
       NO    ╱     ARE THE VALUES FOR     ╲
     ◄──────◄  THE DIFFERENCE VALUES AT OR ABOVE  ►
              ╲      A THRESHOLD?         ╱
      │         ╲─────────────────────────╱
      │                    │ YES
      │                    ▼                          S2403
      │   ┌──────────────────────────────────────┐
      │   │ CORRECT AZIMUTH ANGLE/ ANGLE OF       │
      │   │ ELEVATION FOR ANGLE MODEL ACCORDING   │
      │   │     TO LEVEL OF DIFFERENCE VALUE      │
      │   └──────────────────────────────────────┘
      │                    │
      └────────────────────┤
                           ▼
                    ┌─────────────┐
                    │     END     │
                    └─────────────┘
```

Europäisches
Patentamt

European
Patent Office

Office européen
des brevets

# EUROPEAN SEARCH REPORT

**Application Number**

EP 24 17 3009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "G-PCC 2nd edition codec description", 141. MPEG MEETING; 20230116 - 20230120; ONLINE; (MOTION PICTURE EXPERT GROUP OR ISO/IEC JTC1/SC29/WG11), , no. n22421 10 April 2023 (2023-04-10), XP030308576, Retrieved from the Internet: URL:https://dms.mpeg.expert/doc_end_user/d ocuments/141_OnLine/wg11/MDS22421_WG07_N00 506.zip MDS22421_WG07_N00506_v1.docx [retrieved on 2023-04-10] * page 4 - page 76 * ----- | 1-15 | INV. H04N19/463 H04N19/50 H04N19/597 |
| X | US 2022/108491 A1 (RAY BAPPADITYA [US] ET AL) 7 April 2022 (2022-04-07) * paragraph [0004] - paragraph [0190] * ----- | 1,8,14, 15 | |
| X,P | "G-PCC 2nd edition codec description", 144. MPEG MEETING; 20231016 - 20231020; HANNOVER; (MOTION PICTURE EXPERT GROUP OR ISO/IEC JTC1/SC29/WG11), , no. n23290 20 January 2024 (2024-01-20), XP030313793, Retrieved from the Internet: URL:https://dms.mpeg.expert/doc_end_user/d ocuments/144_Hannover/wg11/MDS23290_WG07_N 00720.zip MDS23290_WG07_N00720_v1.docx [retrieved on 2024-01-20] * page 6 - page 111 * ----- | 1-15 | **TECHNICAL FIELDS SEARCHED (IPC)** H04N |

The present search report has been drawn up for all claims

| Place of search | Date of completion of the search | Examiner |
|---|---|---|
| Munich | 23 September 2024 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 3009

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2024

| Patent document cited in search report | | Publication date | Patent family member(s) | | Publication date |
|---|---|---|---|---|---|
| US 2022108491 A1 | | 07-04-2022 | BR | 112023005737 A2 | 02-05-2023 |
| | | | BR | 112023005746 A2 | 02-05-2023 |
| | | | CN | 116325749 A | 23-06-2023 |
| | | | CN | 116325756 A | 23-06-2023 |
| | | | EP | 4226627 A1 | 16-08-2023 |
| | | | EP | 4226628 A1 | 16-08-2023 |
| | | | JP | 2023545699 A | 31-10-2023 |
| | | | JP | 2023545700 A | 31-10-2023 |
| | | | KR | 20230081704 A | 07-06-2023 |
| | | | KR | 20230081705 A | 07-06-2023 |
| | | | TW | 202220442 A | 16-05-2022 |
| | | | TW | 202222075 A | 01-06-2022 |
| | | | US | 2022108484 A1 | 07-04-2022 |
| | | | US | 2022108491 A1 | 07-04-2022 |
| | | | WO | 2022076197 A1 | 14-04-2022 |
| | | | WO | 2022076198 A1 | 14-04-2022 |

EPO FORM P0459

For more details about this annex : see Official Journal of the European Patent Office, No. 12/82

**REFERENCES CITED IN THE DESCRIPTION**

**Patent documents cited in the description**

- JP 2018116452 A

- JP 2023077766 A